# EUROPÄISCHE PATENTSCHRIFT

(11) **EP 1 097 532 B1**
(45) Veröffentlichungstag und Bekanntmachung des Hinweises auf die Patenterteilung: **10.12.2003**
(21) Anmeldenummer: 99945876.3
(22) Anmeldetag: 01.07.1999
(51) Int. Cl.: H04B 10/135, H04B 10/18

(54) **EINRICHTUNG ZUR DETEKTION VON POLARISATIONSMODENDISPERSION**
DEVICE FOR DETECTING POLARIZATION MODE DISPERSIONS
DISPOSITIF PERMETTANT DE DETECTER UNE DISPERSION DE POLARISATION

(30) Priorität: 10.07.1998 DE 19830990; 11.09.1998 DE 19841755
(43) Veröffentlichungstag der Anmeldung: 09.05.2001
(73) Patentinhaber: SIEMENS AKTIENGESELLSCHAFT, 80333 München (DE)
(72) Erfinder: NOE, Reinhold, D-33100 Paderborn (DE)
(86) Internationale Anmeldenummer: DE9902020
(87) Internationale Veröffentlichungsnummer: WO00003506

(56) Entgegenhaltungen:
- US-A- 5 473 457
- TAKAHASHI T ET AL: "AUTOMATIC COMPENSATION TECHNIQUE FOR TIMEWISE FLUCTUATING POLARISATION MODE DISPERSION IN IN-LINE AMPLIFER SYSTEMS" ELECTRONICS LETTERS,GB,IEE STEVENAGE, Bd. 30, Nr. 4, Seite 348-349 XP000439537 ISSN: 0013-5194 in der Anmeldung erwähnt
- PATENT ABSTRACTS OF JAPAN vol. 1995, no. 11, 26. Dezember 1995 (1995-12-26) & JP 07 231297 A (TOSHIBA CORP), 29. August 1995 (1995-08-29)
- MEINKE; GUNDLACH: "Taschenbuch der Hochfrequenztechnik", 1992, SPRINGER VERLAG BERLIN, BERLIN

## Beschreibung

Die Erfindung betrifft eine Einrichtung zur Detektion von Polarisationsmodendispersion eines optischen Datensignals gemäß dem Oberbegriff des Patentanspruches 1.

In der optischen Übertragungstechnik werden lange Lichtwellenleiter-Übertragungsstrecken eingesetzt. Die Lichtwellenleiter sind herstellungsbedingt nicht vollständig isotrop, sondern schwach doppelbrechend. Wegen der langen Übertragungsstrecke ergibt sich eine frequenzabhängige Polarisationstransformation - Polarisationsmodendispersion oder Polarisationsdispersion genannt, abgekürzt PMD. Diese führt durch Änderung der Polarisation des optischen Signals als Funktion der optischen Frequenz und - verbunden damit - unterschiedlichen frequenzabhängigen Laufzeiten zur Verbreiterung gesendeter Impulse, wodurch empfangsseitig deren Erkennbarkeit reduziert und dadurch die übertragene Datenrate begrenzt wird.

Erschwerend kommt hinzu, daß sich durch Temperaturänderung oder mechanische Beanspruchung das Übertragungsverhalten der Strecke und somit auch die PMD ändert. Deshalb werden adaptive PMD-Kompensatoren eingesetzt, die in den Übertragungspfad eingefügt werden. Zu deren Ansteuerung müssen im optischen Empfänger PMD-Verzerrungen detektiert werden. Der Kompensator läßt sich dann beispielsweise mit einem Gradientenalgorithmus optimal einstellen.

In Electronic Letters 17. Februar 1994, Band 30, Nr. 4, Seite 348 bis 349 wird ein Bandpaßfilter zur Filterung eines Datensignals eingesetzt, dessen PMD zu detektieren ist. Ein Leistungsdetektor am Filterausgang liefert ein Signal, das desto höher ist, je geringer die PMD-Verzerrungen sind.

Nachteilig ist, daß bei Vorliegen großer PMD erster Ordnung sich dieses Signal als Funktion der differentiellen Gruppenlaufzeit DGD (Differential Group Delay) nicht monoton verändert und daher keine eindeutigen Signale zu gewinnen sind.

In Proceedings OEC 94, 14e-12, Seiten 258 bis 259, Makuhari Messe, Japan 1994 wird ein anderes Verfahren verwendet, bei dem die Leistung des Differenzsignals zwischen Entscheiderausgang und Entscheidereingang ausgewertet wird. Dieses Signal besitzt aber eine geringere Empfindlichkeit für PMD-Verzerrungen als ein geeignetes Bandfilter.

Insbesondere bei starken PMD-Verzerrungen, in denen die DGD die Bitdauer überschreitet, kann es außerdem zu falschen Entscheidungen kommen, so daß das gewonnene Signal in solchen Fällen ein ungeeignetes Kriterium für das Vorliegen von PMD-Verzerrungen ist.

Auch aus dem Patent US 5,473,457 ist eine Einrichtung zur PMD-Kompensation bekannt. Diese verwendet eine polarisationserhaltende Faser und einen Polarisationssteller zur Kompensation. Allein kann ein Polarisationossteller keine PMD kompensieren, da bei die Laufzeiten zwischen den beiden orthogonalen Komponenten im allgemeinen den Stellbereich eines Polarisationsstellers weit überschreiten. Zur Einstellung des Polarisationsstellers wird Sendesignal mit einem sinusförmigen Signal moduliert und das Empfangssignal in zwei orthogonale Komponenten zerlegt und in elektrische Signale umgesetzt. Die Amplituden der elektrischen Signale werden genutzt, um den Polarisationssteller optimal einzustellen.

Diese Methode benötigt eine zusätzliche Modulation des optischen Signals, eine polarisationserhaltende Faser und ist nur für eine PMD-Grundkompensation geeignet.

Die Aufgabe der Erfindung besteht darin, einen zuverlässigen Detektor auch für größere Werte der differentiellen Gruppenlaufzeit anzugeben. Ferner ist eine geeignete Anordnung zur Kompensation der Polarisationsmodendispersion und auch zur optimalen Einstellung dieses Detektors anzugeben.

Die Aufgabe wird durch eine Einrichtung zur Detektion von Polarisationsmodendispersion gemäß Anspruch 1 gelöst.

In dem unabhängigen Anspruch 7 ist eine Variante dieser Lösung beschrieben.
Vorteilhafte Weiterbildungen der Erfindung sind in den Unteransprüchen angegeben.

Der besondere Vorteil der Erfindung liegt in der Kombination von in den genutzten Hauptbereichen monoton verlaufenden Ausgangsspannungen mehrerer Filter und deren großer Steilheit, was mit einem einzigen Bandpaßfilter oder einem einzigen Tiefpaßfilter nicht möglich ist. Hierdurch wird eine wesentlich genauere Kompensation möglich.

Die Verwendung von Bandpaßfiltern hat gegenüber der Verwendung von Tiefpässen den Vorteil größerer Steilheit der Filter-Ausgangsspannungen als Funktion vorliegender differentieller Gruppenlaufzeit. Hierdurch kann eine noch genauere/schnellere Kompensation durchgeführt werden.

Anstelle von mehreren Bandpaßfiltern/Tiefpässen kann auch ein umschaltbares/steuerbares Bandpaßfilter oder ein umschaltbarer/steuerbarer Tiefpaß verwendet werden.

Die Detektionseinrichtung kann durch weitere Steuerkriterien ergänzt werden. Besonders vorteilhaft sind hierbei Einrichtungen, die - gewollt erzeugte - Fehlerraten eines Datenhilfssignals auswerten, das aus dem empfangenen optischen Signal gewonnen wird. Eine besonders einfache Schaltung kann durch eine steuerbare Abtastschwelle bei der Auswertung des Datensignals realisiert werden.

Ausführungsbeispiele der Erfindung werden anhand von Figuren beschrieben.

Es zeigen:
Figur 1 den normierten Verlauf der Filterausgangs-spannungen,
Figur 2 ein Ausführungsbeispiel der Erfindung mit drei Bandpässen
Figur 3 ein weiteres Ausführungsbeispiel mit einem steuerbaren Bandpaß,
Figur 4 ein weiteres Ausführungsbeispiel mit zusätzlicher Auswertung eines Datenhilfssignals und
Figur 5 ein weitere Variante dieses Ausführungsbeispiels.

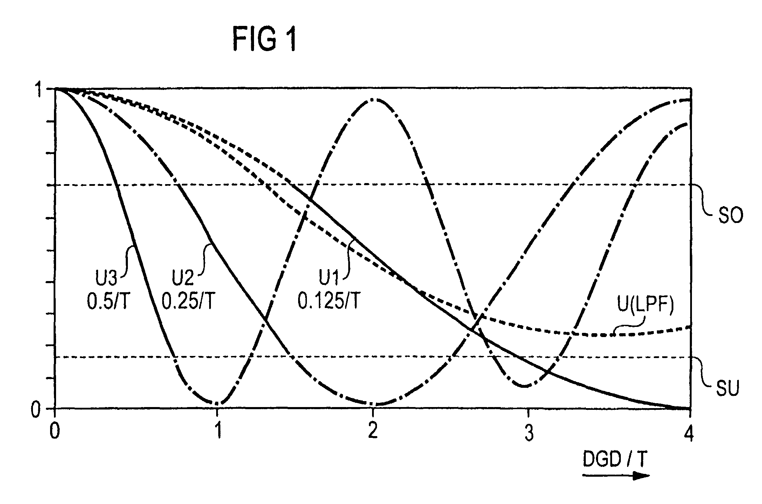

**Figur 1** zeigt den genormten Verlauf der Filterausgangsspannungen U1 bis U3 von drei Bandpaßfiltern, deren Mittenfrequenz 0,125/T, 0,25/T und 0,5/T betragen, wobei T die Bitdauer des übertragenen Datensignals ist. Außerdem ist die Ausgangsspannung U(LPF) eines Tiefpaßfilters mit der Grenzfrequenz 0,125/T in Abhängigkeit von der genormten differentiellen Gruppenlaufzeit DGD/T bei gleich starker Anregung beider Hauptpolarisationen aufgetragen. ( Als Hauptpolarisationen oder "principal states-of-polarization", im folgenden als PSP bezeichnet, werden diejenigen beiden zueinander orthogonalen Polarisationen genannt, die sich bei Änderung der optischen Frequenz in erster Näherung nicht ändern. In polarisationserhaltenden Lichtwellenleitern fallen die Hauptpolarisationen mit den Hauptachsen zusammen, sind also horizontal und vertikal. Im allgemeinen sind die Hauptpolarisationen aber beliebige orthogonale Paare elliptischer Polarisationen. Die Hauptpolarisationen besitzen verschiedene Gruppenlaufzeiten, deren Differenz als "differential group delay", im folgenden DGD oder differentielle Gruppenlaufzeit, bezeichnet wird. Wird ein optisches Signal mit einer Hauptpolarisation übertragen, so findet in Näherung erster Ordnung keine Impulsverbreiterung statt. Wird es mit einer Polarisation übertragen, die bei Aufteilung nach den beiden Hauptpolarisationen dort gleichen Leistungsanteilen entspricht, kommt es zu maximaler Impulsverbreiterung, weil zwei gleich starke Impulse mit Laufzeitunterschieden der Größe DGD überlagert werden.
Ändern sich die Hauptpolarisationen als Funktion der optischen Frequenz, so wird bei eingangsseitiger Verwendung einer Hauptpolarisation, die einer bestimmten Frequenz entspricht, die Ausgangspolarisation als Funktion der Frequenz aber trotzdem ändern, aber eben erst in höherer als erster Ordnung. Dies bezeichnet man als PMD höherer Ordnung. Im allgemeinen tritt PMD höherer Ordnung auf, wobei aber PMD erster Ordnung durch seine Auswirkungen dominiert und deshalb bevorzugt kompensiert werden muß.)

Wie ersichtlich, ermöglicht das Ausgangssignal U3 eine fehlerfreie Detektion der PMD nur bis zu einem Wert der DGD von 1T, denn für Werte zwischen 1T und 2T ändert die Steigung der Funktion das Vorzeichen. Entsprechendes gilt für die Ausgangsspannungen der anderen Bandpaßfilter und in geringerem Maß auch für die des Tiefpaßfilters.

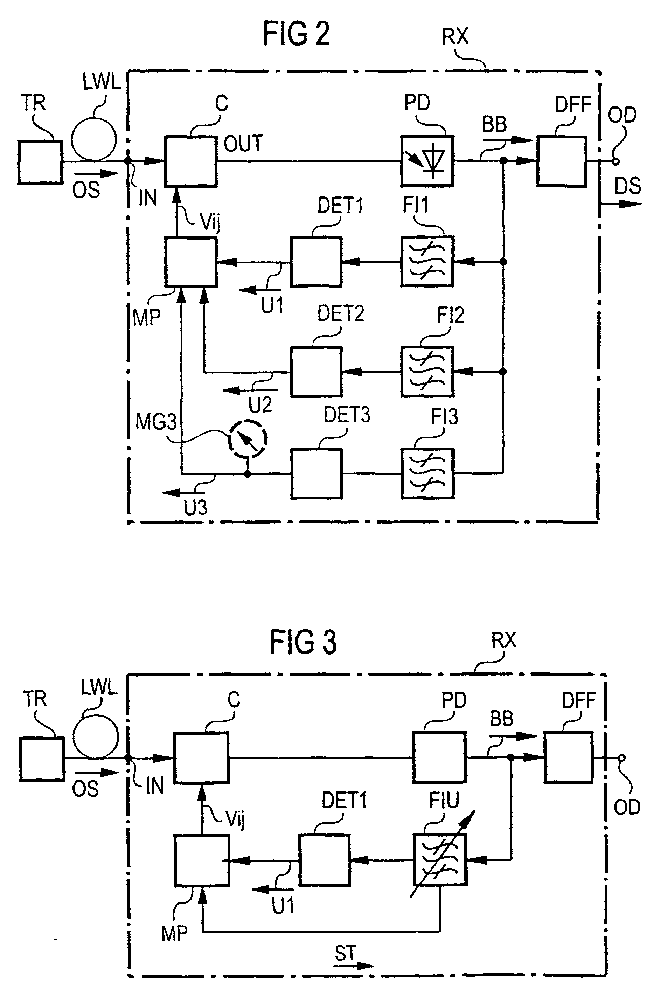

In **Figur 2** ist die Verwendung der Einrichtung zum Detektieren von PMD in einem Kompensator dargestellt. Ein optischer Sender TR sendet ein optisches Signal OS über einen Lichtwellenleiter LWL zu einem optischen Empfänger RX. Dieser besitzt eine Fotodiode PD um Umsetzung des optischen Signals in ein elektrisches Signal. Ein nachgeschalteter Entscheider DFF gibt am Ausgang OD das übertragene Datensignal DS ab.

Der Fotodiode ist ein Polarisationsmodentransformator C zur Kompensation der Polarisationsmodendispersion vorgeschaltet, dessen Eingang IN mit dem Empfängereingang identisch ist.

Das Regelkriterium für den Polarisationsmodentransformator C wird aus dem von der Fotodiode abgegebenen Basisbandsignal BB gewonnen. Dieses wird mehreren Filtern FE1 bis FE3 zugeführt, deren Ausgängen jeweils ein Leistungsmesser DET1 bis DET3 nachgeschaltet ist. Durch Glättungskondensatoren oder ähnliche Einrichtungen besitzen diese Leistungsmesser auch eine Glättungs- oder Tiefpaßfunktion. Die Bandpaßfilter weisen vorteilhafterweise Mittenfrequenzen von 0,125/T, 0,25/T und 0,5/T auf. Die Bandbreiten betragen etwa das 0,0001fache bis 0,2fache der jeweiligen Mittenfrequenz. Bei geringer Bandbreite eines Bandpaßfilters kann im Zuge der Leistungsmessung in den Leistungsmessern DET1 bis DET3 auf Glättung weitgehend verzichtet werden.

Einzelheiten wie Verstärker sind aus Gründen der Übersichtlichkeit nicht dargestellt.

Um die Einstellung des Kompensators anschaulich zu erklären, wird am besten das anfängliche Vorliegen einer großen differentiellen Gruppenlaufzeit vorausgesetzt. Zunächst wird die Ausgangsspannung U1 des Bandpaßfilters FI1 (die durch den Leistungsmesser gemessen wird) mit der niedrigsten Mittenfrequenz 0,125/T von einem als Regler MP verwendeten Mikroprozessor (mit A/D- und D/A-Wandler) zur Optimierung der Kompensatoreinstellung verwendet. Sobald dieses Signal eine (in der Figur obere)Schwelle SO überschreitet, wird zur Optimierung das Ausgangssignal des Bandpaßfilters FI2 mit der nächsthöheren Mittenfrequenz 0,25/T verwendet. Wenn auch dieses ein starkes Ausgangssignal liefert, das die Schwelle (oder eine entsprechend der Ausführungsform gewählte andere Schwelle) überschreitet, wird auf das Bandpaßfilter mit der höchsten Mittenfrequenz 0,5/T umgeschaltet. Dieses besitzt zwar den geringsten Monotonitätsbereich des Ausgangssignals, aber durch die Mitbewertung der Ausgangssignale der anderen Bandpaßfilter ist sichergestellt, daß es Ausgangssignale im ersten Monotonizitätsbereich 0≤DGD≤T liefert. Deshalb kann man seine hohe Empfindlichkeit zur Kompensation der PMD-Verzerrungen besonders vorteilhaft nutzen. Die genutzten Monotonizitätsbereiche sind als Hauptwerte durchgezogen in der Figur 1 eingezeichnet.

Um eine optimale Bitfehlerquote zu erreichen, kann auch eine nichtlineare oder lineare Kombination der Bandpaßfilter-Ausgangssignale bzw. der Ausgangssignale der nachgeschalteten Leistungsdetektoren vorgenommen werden. Dazu verwendet man anstelle des als Funktion der Ausgangssignale der niederfrequenteren Bandpaßfilter ausgewählten Filterausgangssignals einfach noch das oder die Ausgangssignale der niederfrequenteren Signale mit: Sofern das Ausgangssignal von DET1 seine Schwelle nicht überschritten hat, wird nur dieses verwendet.

Ist die Schwelle überschritten, wird auch das Ausgangssignal von DET2 hinzugenommen. Ist schließlich auch dessen Schwelle überschritten, wird das Ausgangssignal von DET3 hinzugenommen.

Für Meßzwecke können an die Ausgänge der Detektoren DET1 bis DET3 Meßgeräte direkt angeschaltet werden, von denen in Figur 2 eines, MG3, dargestellt ist.

In **Figur 3** ist eine Variante der Detektionseinrichtung dargestellt, bei der die drei Bandpaßfilter durch ein einziges umschaltbares/steuerbares Bandpaßfilter FIU ersetzt sind. Die Vorgehensweise bei der Kompensation bleibt gleich. Der als Regler verwendete Mikroprozessor MP merkt sich jeweils die vorhergehenden Ausgangsspannungen, so daß eine Zuordnung der Hauptwerte (Monotoniebereiche) der Filter mit höheren Mittenfrequenzen eindeutig möglich ist. Die Eistellung des Filters erfolgt durch ein Steuersignal ST.

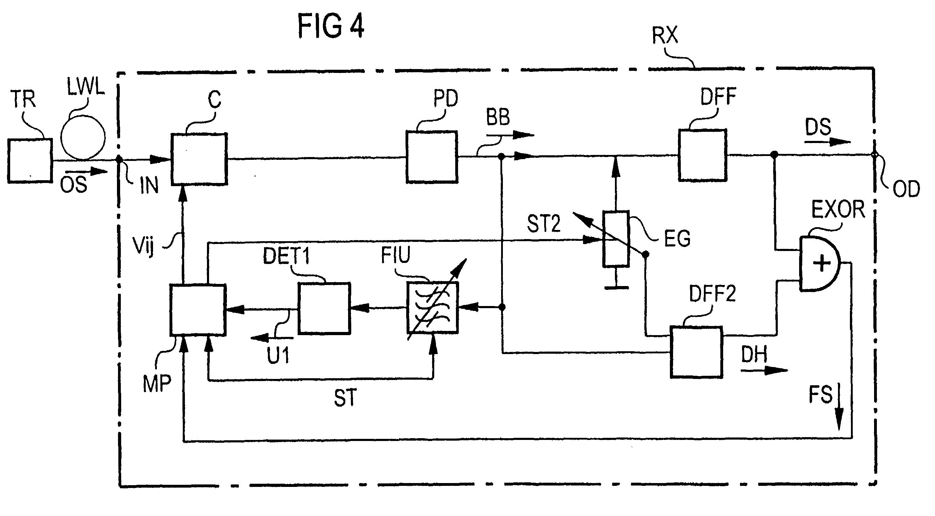

In **Figur 4** ist eine weitere Variante dargestellt, bei der ein zweiter Entscheider DFF2 verwendet wird, dem ebenfalls das Basisbandsignal BB zugeführt wird. In diesem Ausführungsbeispiel ist die Schwelle des Entscheiders über eine Einstelleinrichtung EG so weit verstellbar, daß dieser bereits ein fehlerbehaftetes Datenhilfssignal DH liefert, wenn der erste Entscheider DFF noch ein im wesentlichen fehlerfreies Datensignal DS abgibt. Die Ausgangssignale werden in einem Exklusiv-Oder-Gatter EXOR miteinander verglichen, und das so gewonnene Fehlersignal FS wird ebenfalls durch den Mikroprozessor MP zur Steuerung des Polarisationsmodentransformators C verwendet. Durch Verschiebung der Schwelle des zweiten Entscheiders wird ständig ein Maß dafür entwickelt, wie gut die Signalqualität im Hinblick auf eine erreichbare Bitfehlerquote ist. Je geringer die Fehlerrate des Datenhilfssignals bei einer Verschiebung der Schwelle aus dem Optimum ist, desto besser ist die Signalqualität. Im Groben werden eine maximale Ausgangsspannung des umschaltbaren/steuerbaren Filters FIU und eine minimale Fehlerrate übereinstimmen. Eine genauere Bewertung, die zu einer niedrigeren Bitfehlerrate des Entscheiders DFF führt, ergibt sich hingegen bei Verwendung des Fehlersignals FS. Da Abweichungen des Datenhilfssignals DH vom Datensignal DS aber stochastisch auftreten, ist eine relativ lange Meß- oder Mittelungszeit des Fehlersignals FS erforderlich, um einen besonders gutes Signal-Rausch-Verhältnis und damit eine optimale Kompensation zu gewinnen. Die mit Hilfe des zweiten Entscheiders gewonnene zusätzliche Information wird dazu eingesetzt, das Filter FIU zu optimieren, d. h.. dessen Übertragungsfunktion zu verändert. Diese adaptive Betriebsform erscheint besonders günstig, um Exemplarstreuungen, Temperaturschwankungen, Auftreten nicht linearer Effekte usw. tolerierbar zu machen. Der große Vorteil dieser Ausführungsformen besteht darin, daß durch das Filterausgangssignal bereits eine rasche Kompensation möglich ist und für die Feineinstellung und die Einstellung der Übertragungsfunktion des Filters ausreichend Zeit zur Verfügung steht.

Insbesondere in Fällen, in denen es auf ein schnelles Einstellen des Polarisationsmodentransformators C nicht ankommt, ist aber auch die Verwendung nur eines Fehlersignals FS möglich, so daß in Figur 4 das Filter FIU und der Leistungsdetektor DET1 entfallen könnten.

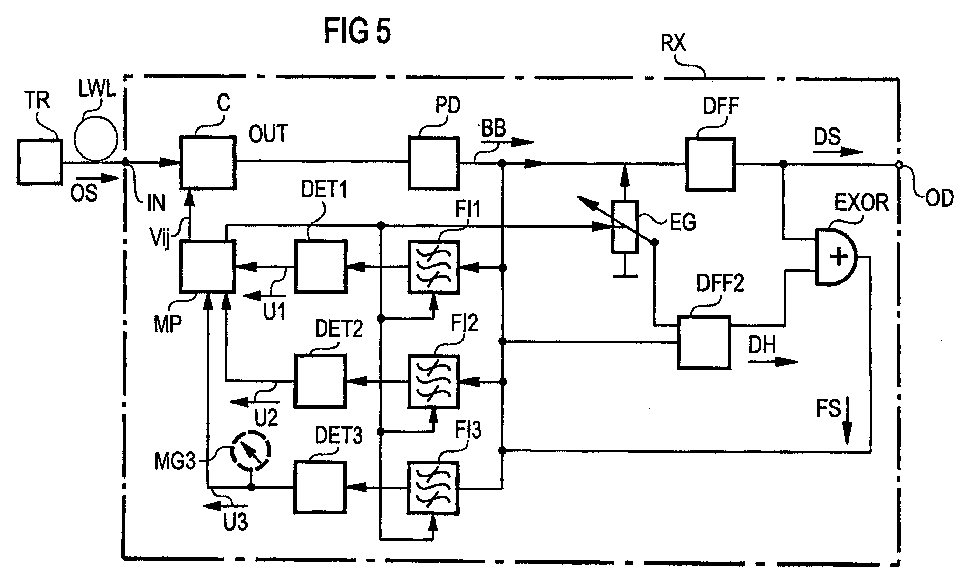

Bei der Verwendung von mehreren Bandpaßfilter, wie in **Figur 5** dargestellt, können die Übertragungsfunktionen der Filter oder die Gewichtungen der einzelnen Filterausgangssignale so verändert werden, daß die geringsten PMD-Verzerrungen auftreten. Da dies langsam erfolgen kann, während die Filterausgangssignale und ihre Kombination rasch zur Verfügung stehen, ergeben sich durch diese adaptive Betriebsform dieselben Vorteile wie im Ausführungsbeispiel der Figur 4.

Prinzipiell kann die Steuerung des Polarisationsmodentransformators auch durch das Fehlersignal erfolgen.

## Patentansprüche

1. Einrichtung zur Detektion von Polarisationsmodendispersion eines optischen Datensignals (OS) mit einem Filter (FI1), an dessen Ausgang ein Leistungsmesser (DET1) angeschaltet ist,
**dadurch gekennzeichnet,**
**daß** mindestens ein weiteres Filter (FI2, FI3) mit einem nachgeschalteten Leistungsmesser (DET2, DET3) vorgesehen ist, daß die Ausgangsspannungen (U1, U2,U3) der Leistungsmesser (DET1, DET2, DET3) ausgewertet werden,
**daß** als Filter (FI1, FI2, FI3) Bandpaßfilter vorgesehen sind und daß nur die zwischen einer differentiellen Gruppenlaufzeit (DGD) von minimal 0 bis maximal zum Vorzeichenwechsel der Steigung liegenden Monotoniebereiche der Ausgangsspannungen der Filter (FI1, FI2, FI3) bewertet werden.

2. Einrichtung nach Anspruch 1,
**dadurch gekennzeichnet,**
**daß** bei einem unterhalb einer oberen Schwelle (SO)liegendem Ausgangssignals (U1) des Filters (FI1) mit der niedrigsten Mittenfrequenz dieses Ausgangssignal (U1) allein bewertet wird,
und **daß** bei Überschreiten dieser Schwelle (SO) durch das Ausgangssignal (U1) das Ausgangssignal (U2, U3) des Filters (FI2) mit der nächsthöheren Mittenfrequenz allein oder zusätzlich bewertet wird und daß eine entsprechende Bewertung für zusätzliche Filter (FI3) mit höheren Mittelfrequenzen erfolgt.

3. Einrichtung nach Anspruch 2,
**dadurch gekennzeichnet,**
**daß** die Mittenfrequenzen der Bandpaßfilter (FI3, FI2, FI1), ausgehend von der höchsten etwa dem Halben der Bittaktfrequenz entsprechenden Mittenfrequenz, jeweils die halbe Mittenfrequenz gegenüber dem Bandpaßfilter mit der nächst höheren Mittenfrequenz aufweisen.

4. Einrichtung nach einem der vorhergehenden Ansprüche,
**dadurch gekennzeichnet,**
**daß** drei Filter (FI1, FI2, FI3) vorgesehen sind.

5. Einrichtung zur Detektion von Polarisationsmodendispersion eines optischen Datensignals (OS) mit einem Filter (FIU), an dessen Ausgang ein Leistungsmesser (DET1) angeschaltet ist,
**dadurch gekennzeichnet,**
**daß** die Grenzfrequenz des als Tiefpaß oder die Mittenfrequenz des als Bandpaßfilters ausgebildeten Filters (FIU) umschaltbar oder einstellbar ist und
**daß** nur die zwischen einer differentiellen Gruppenlaufzeit (DGD) von minimal 0 bis maximal zum Vorzeichenwechsel der Steigung liegenden Monotoniebereiche der Ausgangsspannung (U1) des Filters (FIU) ausgewertet werden, wobei die bei einer vorhergehenden Filterkonfiguration erhaltenen Ausgangsspannungen mitberücksichtigt werden.

6. Einrichtung nach Anspruch 5,
**dadurch gekennzeichnet,**
**daß** das Bandpaßfilter (FIU) in drei Stufen umschaltbar ist.

7. Einrichtung nach einem der vorhergehenden Ansprüche,
**dadurch gekennzeichnet,**
**daß** sie in einem optischen Empfänger (RX) zur Steuerung eines Polarisationsmodentransformators (C) zur Kompensation der Polarisationsmodendispersion vorgesehen ist.

8. Einrichtung nach Anspruch 6,
**dadurch gekennzeichnet,**
**daß** eine Meßanordnung (EG; DFF2, EXOR) zur Messung der Bitfehlerrate bei einem absichtlich verschlechterten Empfangssignal oder einem geänderten Schwellwert einer zweiten Entscheiderstufe (DFF2) vorgesehen ist, deren Fehlersignal (FS) über einen Regler (MP) zusätzlich den Polarisationsmodentransformator (C) steuert.

9. Einrichtung nach Anspruch 8,
**dadurch gekennzeichnet,**
**daß** über den Regler (MP) außerdem die Übertragungsfunktion der Filter (FIU; FI1, FI2, FI3) oder die Gewichtung der Ausgangssignale (U1, U2, U3) ihrer Leistungsmesser (DET1, DET2, DET3) gesteuert wird.

10. Einrichtung nach Anspruch 7, 8 oder 9,
**dadurch gekennzeichnet,**
**daß** nur jeweils ein Hauptwert eines der Filter (FI1, FI2, FI3) zur Steuerung des Polarisationsmodentransformators (C) vorgesehen ist

11. Einrichtung nach Anspruch 7, 8 oder 9,
**dadurch gekennzeichnet,**
**daß** die Ausgangsspannungen mehrerer oder aller Filter (FI1, FI2, FI3) bzw. die Ausgangsspannungen (U1, U2, U3) ihrer Leistungsmesser (DET1, DET2, DET3) innerhalb ausgewählter Bereiche zur Steuerung des Polarisationsmodentransformators (C) vorgesehen sind

## Claims

1. Device for detecting polarization mode dispersion of an optical data signal (OS) comprising a filter (FI1), to the output of which a power meter (DET1) is connected,
**characterized in**
**that** at least one further filter (FI2, FI3) followed by a power meter (DET2, DET3) is provided,
**that** the output voltages (U1, U2, U3) of the power meters (DET1, DET2, DET3) are evaluated,
**that** band-pass filters are provided as filters (FI1, FI2, FI3), and that only the monotonic ranges between a differential group delay (DGD) of a minimum of 0 to a maximum of the sign change of the slope of the output voltages of the filters (FI1, FI2, FI3) are assessed.

2. Device according to Claim 1,
**characterized in**
**that**, if the output signal (U1) of the filter (FI1) having the lowest centre frequency is below an upper threshold (SO), only this output signal (U1) is assessed, and
**that**, if this threshold (SO) is exceeded by the output signal (U1), the output signal (U2, U3) of the filter (FI2) having the next higher centre frequency is assessed alone or additionally and
**that** there is a corresponding assessment for additional filters (FI3) having higher centre frequencies.

3. Device according to Claim 2,
**characterized in**
**that** the centre frequencies of the band-pass filters (FI3, FI2, FI1), starting from the highest centre frequency corresponding approximately to one half of the bit clock frequency, in each case have half the centre frequency compared with the band-pass filter having the next higher centre frequency.

4. Device according to one of the preceding claims,
**characterized in**
**that** three filters (FI1, FI2, FI3) are provided.

5. Device for detecting polarization mode dispersion of an optical data signal (OS) comprising a filter (FIU) to the output of which a power meter (DET1) is connected,
**characterized in**
**that** the cut-off frequency of the filter (FIU) constructed as low-pass filter or the centre frequency of the filter (FIU) constructed as band-pass filter is switchable or adjustable and
**that** only the monotonic ranges between a differential group delay (DGD) of a minimum of 0 to a maximum of the sign change of the slope of the output voltage (U1) of the filter (FIU) are evaluated, taking also into consideration the output voltages obtained with a preceding filter configuration.

6. Device according to Claim 5,
**characterized in**
**that** the band-pass filter (FIU) can be switched in three stages.

7. Device according to one of the preceding claims,
**characterized in**
**that** it is provided in an optical receiver (RX) for controlling a polarization mode transformer (C) for compensating for the polarization mode dispersion.

8. Device according to Claim 6,
**characterized in**
**that** a measuring arrangement (EG; DFF2, EXOR) for measuring the bit error rate with an intentionally degraded received signal or a changed threshold value of a second decision stage (DFF2) is provided, the error signal (FS) of which additionally controls the polarization mode transformer (C) via a controller (MP) .

9. Device according to Claim 8,
**characterized in**
**that**, in addition, the transfer function of the filters (FIU; FI1, FI2, FI3) or the weighting of the output signals (U1, U2, U3) of their power meters (DET1, DET2, DET3) is controlled via the controller (MP).

10. Device according to Claim 7, 8 or 9,
**characterized in**
**that** in each case only one main value of one of the filters (FI1, FI2, FI3) is provided for controlling the polarization mode transformer (C).

11. Device according to Claim 7, 8 or 9,
**characterized in**
**that** the output voltages of a number of or of all filters (FI1, FI2, FI3) or, respectively, the output voltages (U1, U2, U3) of their power meters (DET1, DET2, DET3) are provided within selected ranges for controlling the polarization mode transformer (C).

## Revendications

1. Système de détection d'une dispersion en mode de polarisation d'un signal de données optique (OS), avec un filtre (FI1), à la sortie duquel est connecté un wattmètre (DET1),
**caractérisé en ce que**
au moins un filtre supplémentaire (FI2, FI3) avec un wattmètre monté en aval (DET2, DET3) est prévu, **en ce que** les tensions de sortie (U1, U2, U3) des wattmètres (DET1, DET2, DET3) sont évaluées,
**en ce que**, en tant que filtres (FI1, FI2, FI3), on a prévu des filtres passe-bande et **en ce que** seules les plages de monotonie des tensions de sortie des filtres (FI1, FI2, FI3), situées entre une durée de propagation différentielle de groupe (DGD) d'une valeur minimale de 0 à une valeur maximale correspondant au changement de signe de la pente sont évaluées.

2. Système selon la revendication 1,
**caractérisé en ce que**
en cas d'un signal de sortie (U1) du filtre (FI1), situé sous un seuil supérieur (SO), l'évaluation a lieu avec uniquement la plus basse fréquence moyenne de ce signal de sortie (U1),
et **en ce qu'**en cas de dépassement de ce seuil (SO) par le signal de sortie (U1), le signal de sortie (U2, U3) du filtre (FI2) est évalué tout seul ou en supplément avec la fréquence moyenne directement supérieure et **en ce qu'**une évaluation correspondante pour des filtres supplémentaires (FI3) est réalisée à des fréquences moyennes plus élevées.

3. Système selon la revendication 2,
**caractérisé en ce que**
les fréquences moyennes des filtres passe-bande (FI3, FI2, FI1), sur la base de la fréquence moyenne la plus élevée, correspondant approximativement à la moitié de la fréquence du rythme binaire, présentent respectivement la moitié de la fréquence moyenne, par rapport au filtre passe-bande ayant la fréquence moyenne directement plus élevée.

4. Système selon l'une quelconque des revendications précédentes,
**caractérisé en ce que**
trois filtres (FI1, FI2, FI3) sont prévus.

5. Système de détection d'une dispersion en mode de polarisation d'un signal de données optique (OS), avec un filtre (FIU), à la sortie duquel est connecté un wattmètre (DET1),
**caractérisé en ce que**
la fréquence limite du filtre conçu en tant que filtre passe-bas ou la fréquence moyenne du filtre conçu en tant que filtre passe-bande (FIU) est commutable ou pilotable et
**en ce que** seules les plages de monotonie de la tension de sortie (U1) du filtre (FIU), situées entre une durée de propagation différentielle de groupe (DGD) d'une valeur minimale de 0 à une valeur maximale correspondant au changement de signe de la pente sont évaluées, les tensions de sorties obtenues par une configuration de filtrage précédente étant également considérées.

6. Système selon la revendication 5,
**caractérisé en ce que**
le filtre passe-bande (FIU) est commutable en trois échelons.

7. Système selon l'une quelconque des revendications précédentes,
**caractérisé en ce**
**qu'**il est prévu dans un récepteur optique (RX), pour le pilotage d'un transformateur en mode de polarisation (C), pour la compensation de la dispersion en mode de polarisation.

8. Système selon la revendication 6,
**caractérisé en ce que**
une configuration de mesure (EG ; DFF2 ; EXOR), dont le signal d'erreurs (FS) pilote en supplément le transformateur en mode de polarisation (C), par l'intermédiaire d'un régulateur (MP), est prévue pour la mesure du taux d'erreurs binaires sur un signal de réception volontairement altéré ou sur une valeur seuil modifiée d'un second échelon du décideur (DFF2).

9. Système selon la revendication 8,
**caractérisé en ce que**
par ailleurs, la fonction de transmission des filtres (FIU ; FI1, FI2, FI3) ou la pondération des signaux de sortie (U1, U2, U3) de leurs wattmètres (DET1, DET2, DET3) est pilotée par l'intermédiaire du régulateur (MP).

10. Système selon l'une quelconque des revendications 7, 8 ou 9,
**caractérisé en ce que**
uniquement une valeur principale respective d'un filtre (FI1, FI2, FI3), est prévue pour le pilotage du transformateur en mode de polarisation (C).

11. Système selon l'une quelconque des revendications 7, 8 ou 9,
**caractérisé en ce que**
les tensions de sortie de plusieurs ou de tous les filtres (FI1, FI2, FI3) ou les tensions de sortie (U1, U2, U3) de leurs wattmètres (DET1, DET2, DET3) sont prévues au sein de plages sélectionnées, pour le pilotage du transformateur en mode de polarisation (C).
